Europäisches Patentamt

European Patent Office

Office européen des brevets

(11) Publication number: **0 289 052 B1**

(12) **EUROPEAN PATENT SPECIFICATION**

(45) Date of publication of patent specification: **22.07.92**   (51) Int. Cl.⁵: **B60R   1/06**

(21) Application number: **88106934.8**

(22) Date of filing: **29.04.88**

(54) **Electrical driving system for foldable outer rearview mirrors of a motor vehicle.**

(30) Priority: **30.04.87 JP 64206/87**

(43) Date of publication of application:
**02.11.88 Bulletin  88/44**

(45) Publication of the grant of the patent:
**22.07.92 Bulletin  92/30**

(84) Designated Contracting States:
**DE FR GB IT SE**

(56) References cited:
**DE-A- 3 226 597**

**PATENT ABSTRACTS OF JAPAN, vol. 10, no.
301 (M-525)[2357], 14th October 1986; & JP-
A-61 113 533 (TOKAI RIKA CO. LTD)
31-05-1986**

**PATENT ABSTRACTS OF JAPAN, vol. 10, no.
299 (M-524)[2355], 11th October 1986; & JP-
A-61 110 638 (TOKAI RIKA CO. LTD)
28-05-1986**

(73) Proprietor: **MURAKAMI KAIMEIDO CO., LTD
12-25, Miyamoto-cho Shizuoka-shi
Shizuoka 422(JP)**

(72) Inventor: **Nakayama, Kiyoshi
11-10, Nishi-kusabuka-cho
Shizuoka-shi Shizuoka-ken, 420(JP)**

(74) Representative: **Riederer Freiherr von Paar zu
Schönau, Anton et al
Van der Werth, Lederer & Riederer Freyung
615 Postfach 2664
W-8300 Landshut(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 289 052 B1

## Description

Background of the invention

1. Field of the Invention

This invention relates to rearview mirrors and, more particularly, to an electrical driving system for foldable outer rearview mirrors of a motor vehicle, as defined in the prior art portion of claim 1.

2. Description of the Prior Art

Outer rearview mirrors are suitably folded to reduce their length when parking or storing motor vehicles. Recently, there have been electrically foldable outer rearview mirrors which are driven by reversible motors provided in the mirror bodies. A driving device of such outer rearview mirrors includes an operation switch for switching the direction of current of the reversible motors. While the operation switch is being held at a folding position, the mirrors are turned toward a folded state. On the other hand, while the switch is being held at an erecting position, the mirrors are turned toward an erected state. When the mirrors are to be turned to a predetermined position, they can be held stationary at that position by releasing the operation switch.

An improved drive system, in which relays and self-holding circuits are provided to let the motors be rotated and stopped indirectly in response to operating a switch instead of rotating and stopping the motors directly by operating a switch, is disclosed in Japanese Patent Application Laid-Open under No. Sho 61-113533. In this system, a motor circuit for each of the right and left mirror bodies includes two relays with a first self-holding circuit which is rendered operative when turning the mirror body from the folded state to the erected state and a second self-holding circuit which is rendered operative when turning the mirror body from the erected state to the folded state. When the mirror body reaches either of these states, a limit switch is operated to release the self-holding state so as to automatically stop the motor. The limit switches for detecting the erected and folded states of the right and left mirrors render the operating relays non-excited, thereby indirectly rendering the respective motor inoperative. It is necessary to provide normal and reverse relays and self-holding circuits for each of the right and left reversible motors. Therefore, the overall circuit is complicated, is inevitably large in size, requires a large number of assembling steps and dictates high cost of manufacture.

From DE-A 32 26 597, it is known to use electric motors, e. g. for adjusting the rear view mirrors, each of the motors being part of a first group or a second group of motors, the motor switches being selectors for motors of the first or the second group and a group selecting switch connecting the one or the other group to the supply. The double use of the relais serving as the motor switches allows reducing the number of relais. However, in this system, each of the active motors has a relais of its own, and a current supply of several motors through one relais, including switch-off of each motor upon demand, the self-holding of the relay being maintained until switch-off of the last motor, is not possible.

An object of the invention is to provide an electrical driving system for the folding and erecting action of a plurality of foldable outer rearview mirrors of a motor vehicle, including relays and self-holding circuits for the relays which serve as motor switches, which system is reduced in size and weight by reducing the number of relays used.

Further, the invention is to provide such system so that it ensures accurate erecting and folding operations and can be provided at low cost.

Summary of the Invention

This is accomplished by the invention as defined in claim 1.

The features of the first part of claim 1 have been derived from JP-A-61-113 533.

According to the invention, a forward or normal relay and a reverse relay are provided commonly to right and left side drive motors, and both the relays and motors are simultaneously disconnected by the limit switches detecting the erected and folded states of the mirrors. The invention allows to use one relay per direction of movement for all motors. Thus, two relays simultaneously serve e. g. two motors, one for each driving direction. This is obtained by the fact that each limit switch is serially connected into the respective motor loop while, via the respective diode, the self holding loop of the relay is maintained until the last limit switch opens. Thereby, it is possible with a single relay per direction that all mirror bodies which possibly are out of phase can be controlled by a reduced installation.

Throughout the specification, by the term "normal" is meant the direction of turning the mirrors from the folded state to the erected state, and by the term "reverse" is meant the direction of turning from the erected state to the folded state.

The relay circuit preferably includes means for preventing each of the relays from operating relatively to other relays, that is, means for inhibiting the simultaneous operation of the other relay in which the break contact for the reverse relay is connected in series with the normal relay and the break contact for the normal relay is connected in series with the reverse relay. When the normal relay is rendered operative by the operation switch which is a momentary switch connected in series with both the normal and reverse relays, a momentary break contact switch connected to the reverse relay is turned off. When the reverse relay is rendered operative, a momentary break contact switch connected to the normal relay is turned off. Further, the relay circuit may include a transistor, connected in series with the normal and reverse relays and adapted to be held operative for a predetermined period of time by charge acquired when the momentary switch as operation switch is operated.

With the above construction according to the invention, the normal or reverse relay is rendered operative by operating the momentary switch, whereby the motors provided in respective mirrors are driven. When the mirrors have been driven to the erected or folded state according to the rotation of the motors, the motors are individually disconnected from the power source by the action of the limit switches, so that the mirrors are held stationary in that state separately.

Brief Description of the Drawings

In the accompanying drawings:

Fig. 1 is a schematic front view showing a foldable outer rearview mirror embodying the invention;

Fig. 2 is a block diagram showing the system according to the invention for driving rearview mirrors;

Fig. 3 is a circuit diagram showing a first embodiment of the system according to the invention;

Fig. 4 is a circuit diagram showing a second embodiment of the invention, which has a reduced number of relay contacts compared to that in the circuit shown in Fig. 3;

Fig. 5 is a circuit diagram showing a third embodiment of the invention;

Fig. 6 is a circuit diagram showing a different embodiment of a relay circuit;

Fig. 7 is a circuit diagram showing a further different embodiment of the relay circuit; and

Fig. 8 is a circuit diagram showing another further different embodiment of the relay circuit.

Description of the Preferred Embodiments

The present invention will now be described in detail with reference to the drawings. As concerns the circuit arrangements, particular reference to the drawings is made so as not to overloaden the description. It is thus emphazised that the details of the circuit arrangements shown in the drawings are intended to be materially disclosed. Referring first to Fig.s 1 and 2, there is shown a system for driving foldable outer rearview mirrors suited for use with a motor vehicle.

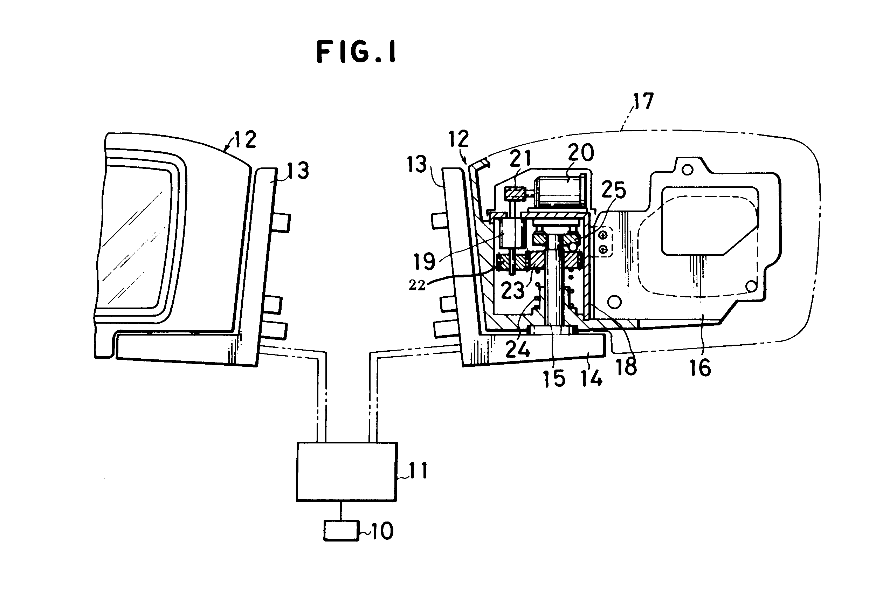

The system includes an operation switch 10 provided in a vehicle compartment, a controller 11 and right and left mirrors 12. Each mirror 12 includes a shaft 15 provided upright on an extension 14 of a base 13, a frame 16 rotatably supported to the shaft 15, a mirror body 17, a gear box 18 provided in a rotary part of the frame 16 near the shaft, a reduction gear mechanism 19 provided in the gear box 18 and an electric motor 20 secured to the top of the gear box 18 for folding the mirror. The reduction gear mechanism 19, as shown in Fig. 1, consists of a reduction gear train connected to a motor output shaft worm gear 21, and its end gear 22 is in mesh with a clutch gear 23 mounted on the shaft 15. The clutch gear 23 is spring-biased by a resilience of a spring 24 toward a clutch retainer 25 secured to the shaft top.

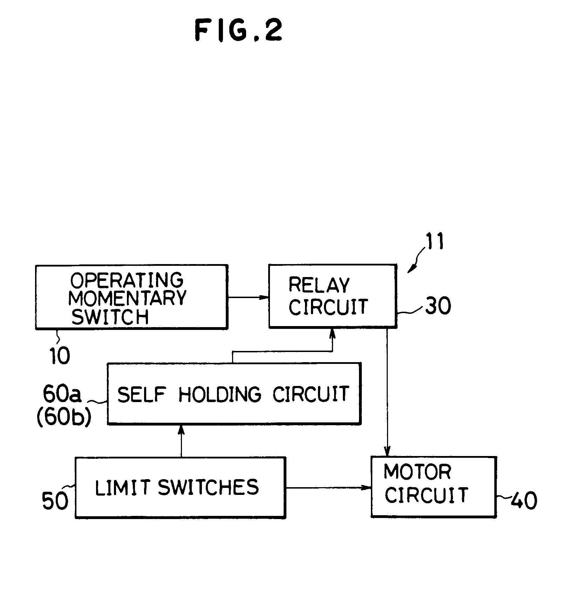

Fig. 2 shows a block diagram of the controller 11. In this block diagram, numeral 10 designates the operation momentary switch which is a see-saw switch, numeral 30 designates a relay circuit, numeral 40 designates a motor circuit, numeral 50 designates a limit switch circuit for detecting both the erected state and the folded state, numeral 60a designates a self-holding circuit for holding the normal relay and numeral 60b designates a self-holding circuit for holding the reverse relay.

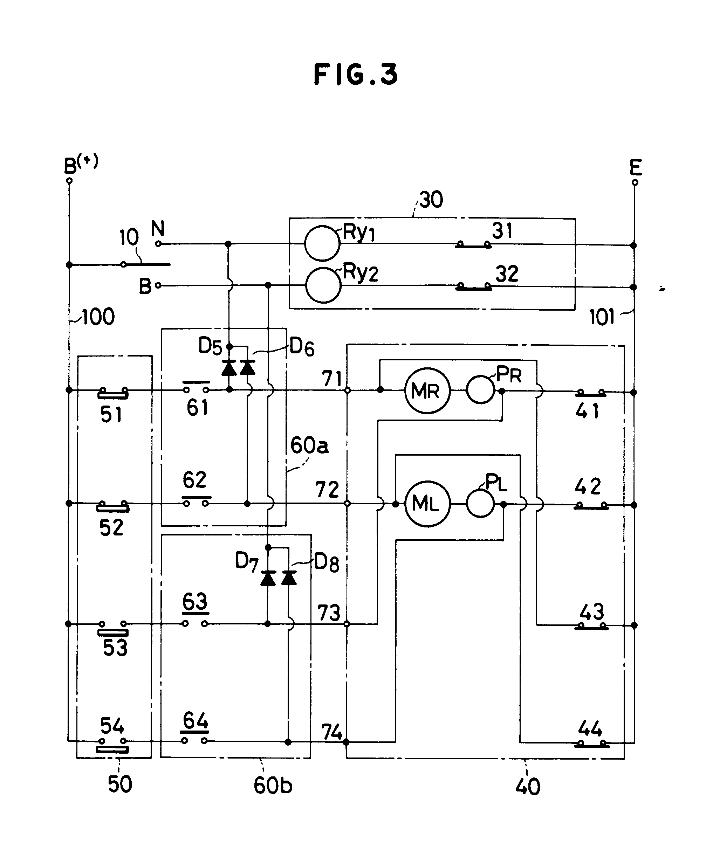

Fig. 3 is a circuit diagram showing an embodiment of the system according to the invention. The illustrated system includes the operation switch 10 which is a see-saw switch having an erecting contact N and a foldintg contact B. The system also includes the relay circuit 30 having a normal relay $Ry_1$, a reverse relay $Ry_2$ and break contacts 31 and 32 for inhibiting simultaneous operation of the respective other relay. The break contact 31 which is connected in series with the relay $Ry_1$ is turned open when the other relay $Ry_2$ is operated. The break contact 32 in series with the other relay $Ry_2$ is turned open when the relay $Ry_1$

is operated. The system further includes a motor circuit 40 having parallel electric motors $M_R$ and $M_L$ in parallel with each other for folding the right or the left mirror body, respectively, overcurrent limitation posisters $P_R$ and $P_L$, e.g., positive characteristic thermistors, connected in series with the respective motors, and relay-break contacts 41 to 44 for preventing simultaneous excitation of the normal relay and the reverse relay. When the reverse relay $Ry_2$ is rendered operative, the break contacts 41 and 42 are turned off, while the break contacts 42 and 43 are turned off when the forward or normal relay $Ry_1$ is operated. Reference numerals 71 to 74 designate input terminals, numeral 100 designates a positive power supply line, and numeral 101 designates a negative power supply line.

The system further includes a limit switch circuit 50 having limit switches 51 and 52 which detect the erected state of the respective right or left mirrors 12 and limit switches 53 and 54 which detect the folded state of the respective right or left mirrors 12. These limit switches are provided in the top surface of the extension 14 shown in Fig. 1. They are connected in parallel and comprise break contacts so that they are normally closed unless they are detecting the given state.

The limit switch 51 is connected to the terminal 71 of a right side motor $M_R$ in the motor circuit 40 through the intermediary of a make contact 61 of the normal relay $Ry_1$, the limit switch 52 is connected to the terminal 72 of a left side motor $M_L$ in the motor circuit 40 through the intermediary of a make contact 62 of the normal relay $Ry_1$, the limit switch 53 is connected to the terminal 73 of the right side motor $M_R$ through the intermediary of a make contact 63 for the reverse relay $Ry_2$ and the limit switch 54 is connected to the terminal 74 of the left side motor $M_L$ through the intermediary of a make contact 64 for the reverse relay $Ry_2$.

The system further includes a self-holding circuit including the normal and reverse relay self-holding circuits 60a and 60b. The normal relay self-holding circuit 60a includes a first circuit for the relay $Ry_1$ consisting of the make contact 61 and a diode $D_5$ connected in series with the limit switch 51 and a second circuit for the relay $Ry_2$ consisting of the make contact 62 and a diode $D_6$ connected in series with the limit switch 52. The reverse relay self-holding circuit 60b includes a third circuit for the relay $Ry_1$ consisting of the make contact 63 and a diode $D_7$ connected in series with the limit switch 53 and a fourth circuit for the relay $Ry_2$ consisting of the make contact 64 and a diode $D_8$ connected in series with the limit switch 54. In the illustrated example, two relay make contacts and two diodes are provided in each self-holding circuit for controlling two motors. Where three or more motors are used, each self-holding circuit will have relay make contacts and diodes corresponding in number to the number of motors provided, and three or more pairs of limit switches for detecting the state of the mirror and break contacts in the motor circuit are also provided (not shown).

Now, the operation of the embodiment shown in Fig. 3 will be described.

Fig. 3 shows a connection state when both the right and left outer rearview mirrors are in the folded state. When the see-saw switch 10 as momentary switch of operation is thrown to the erecting contact N in the above state, the normal relay $Ry_1$ is rendered operative, so that in the self-holding circuit 60a two parallel circuits are formed as follows;

(1) ... positive power supply line B(+) → limit switch 51 → make contact 61 → diode $D_5$ → relay $Ry_1$
(2) ... positive power supply line B(+) → limit switch 52 → make contact 62 → diode $D_6$ → relay $Ry_2$

In this state, the limit switches 51 and 52 and the break contact 31 are "on", so that the normal relay $Ry_1$ is self-held. The positive power supply line then is also connected to the motor circuit to form other two circuits as follows;

(3) ... positive power supply line B(+) → limit switch 51 → make contact 61 → terminal 71 → motor $M_R$ → posister $P_R$ → break contact 41 → negative power supply line E
(4) ... positive power supply line B(+) → limit switch 52 → make contact 62 → terminal 72 →motor $M_L$ → posister $P_L$ → break contact 42 → negative power supply line E

As a result, the right and left side motors $M_R$ and $M_L$ are driven, so that the right and left outer rearview mirrors simultanously start rotation.

When the left mirror reaches the erected state, the limit switch 52 is turned off to open the break contact 43, thus disconnecting the circuits (2) and (4) from the positive power supply line. The left side motor $M_L$ thus is stopped, to stop rotation of the left mirror. Simultaneously or non-simultaneously, when the right mirror reaches the erected state, the limit switch 51 is turned off to open the break contact 44, thus disconnecting the circuits (1) and (3) from the positive power supply line. Thus, the self-holding of the normal relay $Ry_1$ is released, and the right side motor $M_R$ is stopped, to stop rotation of the right mirror.

When the see-saw operation switch 10 is switched to the side of the folding contact B after the right and left mirrors have been erected, since the limit switch 54 and break contact 32 are both "on", the reverse self-holding circuit 60b is rendered operative, so that the reverse relay $Ry_2$ is self-held. At the same time, the terminals 73 and 74 for the reverse circuit for the right and left side motors are connected to the positive power supply line. The motors $M_R$ and $M_L$ are thus driven reversely to cause rotation of the right and left mirrors toward the folding direction.

When the mirrors reach the folded state, the limit switches 53 and 54 are successively turned off to stop the left side motor $M_L$ and then the right side motor $M_R$. At the same time, the reverse relay $Ry_2$ is released from the selfholding to fold the right and left mirrors in a folded state.

In this case, in the relay circuit 30 the break contact 31 of the reverse relay $Ry_2$ is connected in series with the normal relay $Ry_1$ while the break contact 32 of the relay $Ry_1$ is connected in series with the relay $Ry_2$.

Therefore, even if the see-saw switch 10 is closed to operate the relay other than the operative one, the switch output is not accepted.

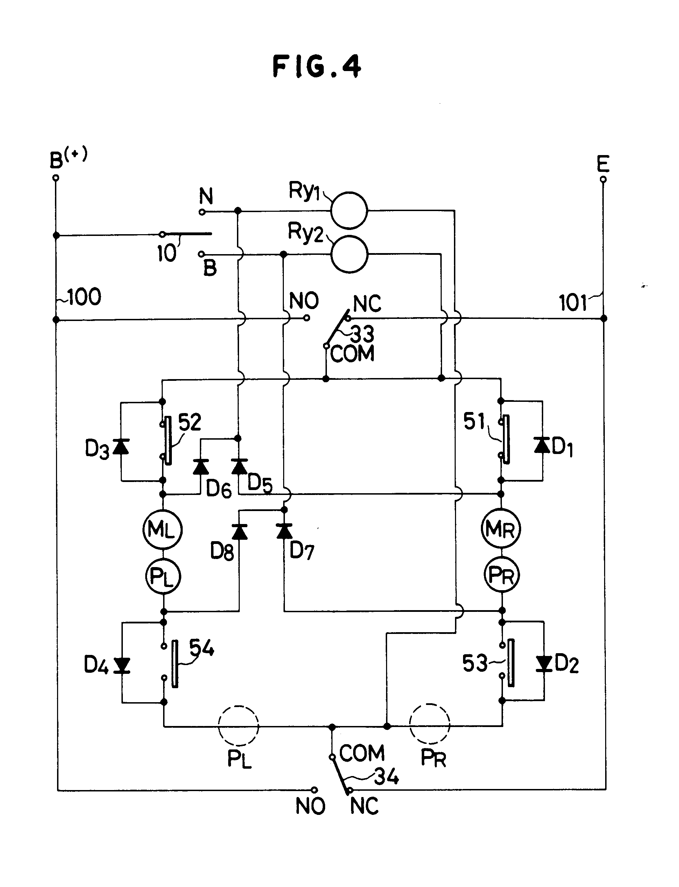

Fig. 4 shows a modification of the circuit shown in Fig. 3. In this instance, c contacts or transfer contacts 33 and 34 are used effectively in lieu of the make contact and break contact for the normal and reverse relays. More specifically, this modification has the same circuit structure as shown in Fig. 3 except for that the transfer contacts 34 and 33 are connected in series with the respective normal and reverse relays $Ry_1$ and $Ry_2$. The posisters $P_R$ and $P_L$ may be provided at positions shown by dashed circles if this is desirable from the standpoint of actual provision of the circuit. In this case, the posisters are provided in the reverse relay self-holding circuit. This arrangement, however, poses no problem in use, for the resistance of the posisters is ignorable compared to the coil resistance of the relays.

Fig. 4 and Fig.s 5 to 8 to be described later show the state of individual contacts when the rigth and left mirrors are in the folded state.

In the circuit of Fig. 4, when the see-saw switch 10 is switched to the side of the erecting contact N, a circuit is formed as follows;

(5) ... positive power supply line $B(+) \rightarrow$ relay $Ry_1 \rightarrow$ normally closed contact NC of the transfer contact 34 → negative power supply line E Then the normal relay $Ry_1$ is operated. Further,

(6) ... positive power supply line $B(+) \rightarrow$ normally open contact NO of transfer contact 33

```
  ┌──────────────────────┴──────────────────────┐
  limit switch 51                  limit switch 52
         ↓                                ↓
  diode D₃                         diode D₄
  └──────────────────────┬──────────────────────┘
                  relay Ry₁
                     ↓
```

normally closed contact NC of transfer contact 34 → negative power supply line E
The relay $Ry_1$ is thus self-held. At the same time, a motor circuit is formed as follows;
(7) ... positive power supply line $B(+) \rightarrow$ normally open contact NO of transfer contact 33 →

```
       ┌── limit switch 51 ──→ MR ──→ PR ──→ D₂ ──┐
  ──→ ──┤                                          ├──→
       └── limit switch 52 ──→ ML ──→ PL ──→ D₄ ──┘
```

normally closed contact CN of transfer contact 34 → negative power supply line E
The motors $M_L$ and $M_R$ are thus simultaneously driven normally, which is forwardly, to cause rotation of the right and left mirrors in the erecting direction. When the left mirror attains the erected state, the limit switch 52 is turned off, thus disconnecting the circuit for driving the motor $M_L$. However, since the limit switch 51 is "on", the relay $Ry_1$ is self-held to drive the motor $M_R$ continually rotating.

When the right mirror reaches the erected state, the limit switch 51 is turned off to disconnect the circuit for driving the motor $M_R$ and the self-holding circuit of the relay $Ry_1$. The motor $M_R$ is thus stopped, to stop the right mirror in the erected state.

When the see-saw switch 10 is subsequently switched to the folding side terminal B, the right and left mirrors start rotation in the folding direction until they stay in the folded state. This operation is substantially the same as in the preceding embodiment, so its description is not given.

The transfer contacts 33 and 34 noted above also have the role of the break contacts 31 and 32 in Fig. 3 for inhibiting the operation of the relay other than the associated one.

5

EP 0 289 052 B1

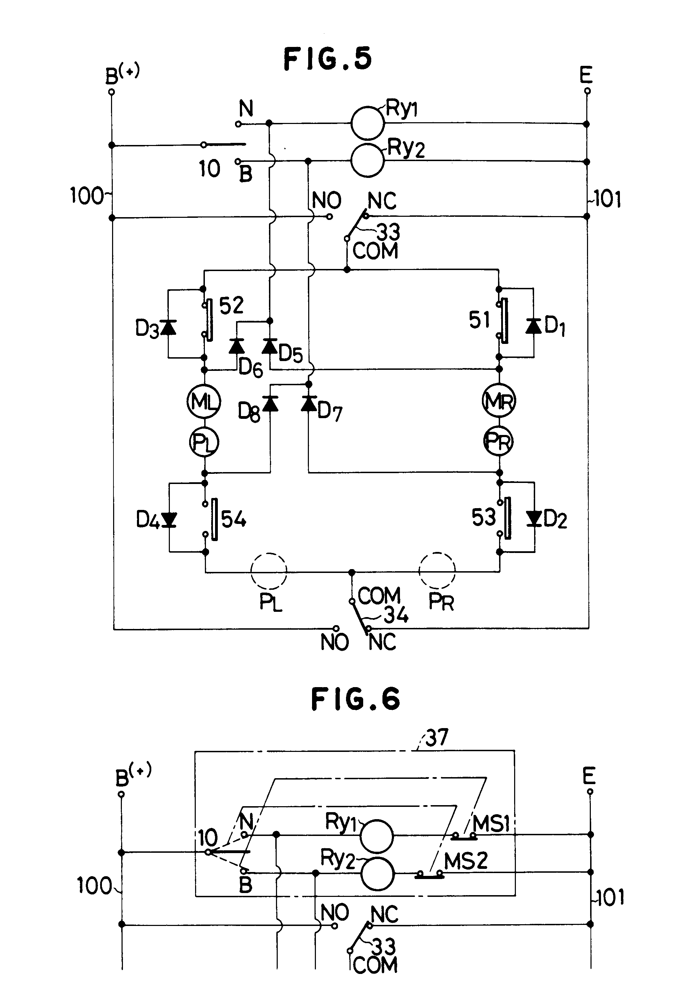

Fig. 5 shows a third embodiment. This circuit is the same as the circuit of Fig. 4 except for that the normal and reverse relays $Ry_1$ and $Ry_2$ are connected in parallel with the respective c switches or transfer contacts 33 and 34. The normal operation is entirely the same as in the embodiment shown in Fig. 4. However, when the see-saw switch 10 is switched to the opposite side during operation, both the normal and reverse relays $Ry_1$ and $Ry_2$ are rendered operative, and also their self-holding circuits are formed for the limit switches 51 to 54 are all "on". Therefore, two motor circuits are formed as follows:

(8) ... Positive power supply line B(+) → contact NO of transfer contact 33 → limit switch 51 → motor $M_R$ → posister $P_R$ → limit switch 53 → contact NC of transfer contact 34 → negative power supply line E

(9) ... positive power supply line B(+) → contact NO of transfer contact 33 → limit switch 52 → motor $M_L$ → posister $P_L$ → limit switch 54 → contact NC of transfer contact 34 → negative power supply line E.

Thus, both the motor terminals are connected to the positive power supply line so that the motors are stopped. It is thus possible to effect an emergency stop. To resume the operation in this case, the power source is once disconnected from the drive circuit and then reconnected, and then the switch 10 is operated again.

Fig. 6 shows a modification of the relay circuit. In this instance, in a relay circuit 37 a momentary switch MS1 which is a break contact is connected in series with the normal relay $Ry_1$, and a momentary switch MS2, also a break contact, is connected in series with the reverse relay $Ry_2$. The momentary switch MS2 is turned off when the see-saw switch 10 is switched to the terminal N, while the momentary switch MS1 is turned off when the switch 10 is switched to the terminal B.

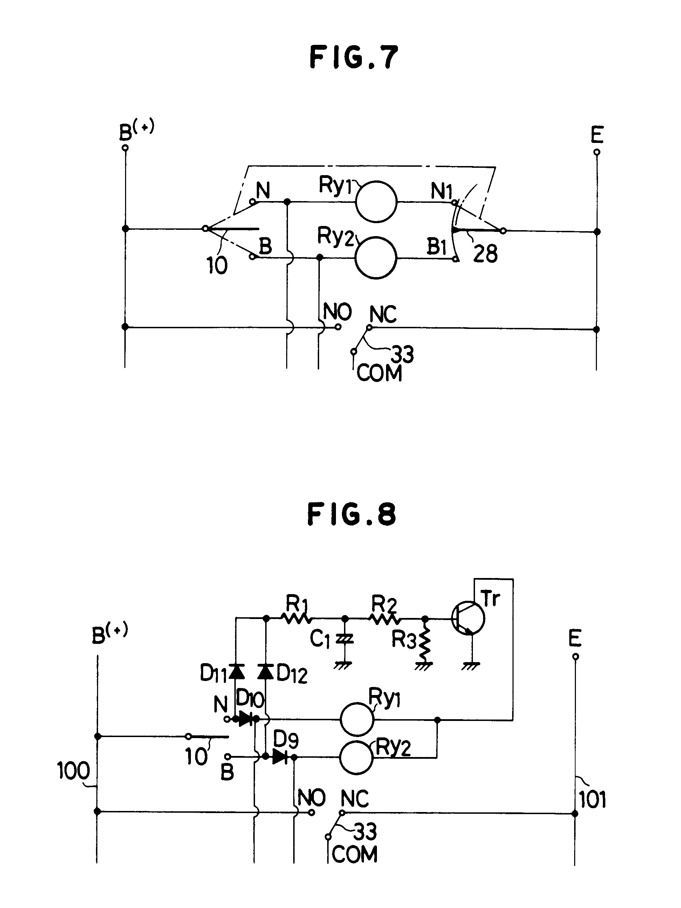

Fig. 7 shows another modification of the relay circuit. In this instance, the relay circuit also includes a movable contact 28 having terminals N1 and B1 connected to the negative power supply line side of the respective relays $Ry_1$ and $Ry_2$ and interlocked to the switch 10. The movable contact 28 is constructed such that its terminals N1 and B1 are connected to each other at the position of neutral and when the see-saw operation switch 10 is thrown, said movable contact 28 is interlocked with said switch 10 to connect with the respective terminals at the side where said switch 10 is thrown. In this case, the normal operation is the same as in the modification shown in Fig. 3. When the switch 10 is switched to the opposite side during operation, for instance while the normal relay $Ry_1$ is being operative, the momentary switch MS1 which is the break contact is turned off to render the normal relay $Ry_1$ inoperative and render the reverse relay $Ry_2$ operative, so that the direction of rotation of the mirrors is reversed. In this way, it is possible to switch the erecting or folding direction of rotation of the mirrors at any desired time.

Fig. 8 shows a further modification of the relay circuit. In this circuit, a transistor Tr is connected in series with the normal and reverse relays $Ry_1$ and $Ry_2$, and the base of the transistor Tr is connected to a charging/discharging circuit consisting of resistors $R_1$ to $R_3$ and a capacitor $C_1$ which circuit itself through respective diodes $D_1 1$ and $D_1 2$ is connected to the erecting and folding contacts N and B of the operation momentary switch 10. In this case, when the see-saw operation switch 10 is switched to the folding side contact B, the capacitor $C_1$ which has been charged through the diode $D_1 2$ and the resistor $R_1$ is discharged through the resistor $R_2$ and then through the resistor $R_3$ and the base of the transistor Tr. The base thus is held at a "H" level for a preset period of time, and the reverse relay $Ry_2$ can be held operative only during this period.

More specifically, if both the limit switches 53 and 54 for detecting the folded state are turned off in the preset period of time noted above, the relay $Ry_2$ is rendered inoperative at that time. If the limit switches are not turned off in the preset time period in case of an accident that the motor is locked, at the end of the preset time the potential on the base of the transistor Tr goes to "L" level to render the relay $Ry_2$ inoperative. In this way, the circuit is protected without use of any posister.

As has been described in the foregoing, according to the invention the limit switches for detecting the erected and folded states of the mirrors act to release the selfholding of the mirrors and at the same time disconnect the mirror drive motors from the power source. In case where a plurality of mirrors are simultaneously driven for rotation by a momentary switch and stopped independently when they reach their erected or folded state, therefore, only a single pair of normal and reverse relays is necessary, whereas in the prior art such relay pair is required for each of the motors mounted in the respective mirrors. It is thus possible to reduce the size, weight and cost of the drive system.

## Claims

1. An electrical driving system for the folding or erecting action of foldable outer rearview mirrors of a motor vehicle, the system being arranged between different potential leads (100, 101) of a current supply, and comprising:

   a plurality of outer rearview mirror bodies (12) foldably mounted on the outer sides of a motor

EP 0 289 052 B1

vehicle;

a relay circuit (30, 37) including a normal relay (Ry$_1$) and a reverse relay (Ry$_2$), said relays being capable of being rendered operative in response to the operation of a momentary operation switch (10) provided in the compartment of the motor vehicle for switching the normal and reverse directions of motor rotation and being self-held, once rendered operative, by respective self-holding circuits (e. g. 60a, 60b), establishing for the respective relay a self-holding loop between the different potential leads (100, 101), this loop comprising the relay winding and a relay contact;

reversible electric motors (20, M$_R$, M$_L$) each mounted in one of said mirror bodies (12) and by a motor loop connected in series to working contacts (61-64, 33, 34) of the relays;

and two limit switches (51-54) for each mirror body (12) which limit switches are each serially inserted into the respective self-holding circuit and are switched open by the mirror body (12) reaching its erected or a folded state, respectively,

characterized in that the limit switches (51-54) are situated in branches which, between the different potential leads (100, 101), are in common to both the relay self-holding loop and the motor loop for each relay (RY$_1$, RY$_2$) and each motor (MR, ML), these branches, as far as being part of the self-holding loops of the relays, being coupled to the respective relays via diodes (D5-D8).

2. The system according to claim 1, characterized in that said relay circuit (30) further includes means for inhibiting simultaneous operation of the respective other relay so that a break contact (31) for the reverse relay (Ry$_2$) is connected in series with the normal relay (Ry$_1$) and the break contact (32) for the normal relay (Ry$_1$) is connected in series with the reverse relay (Ry$_2$).

3. The system according to claim 1 characterized in that said self-holding circuit includes a first selfholding circuit for said normal relay (Ry$_1$) and a second self-holding circuit for said reverse relay (Ry$_2$), said first and second self-holding circuits each including a transfer contact (33, 34) to be switched from a closed state to an open state when the relay of the associated self-holding circuit is rendered operative (Fig.s 4 to 8).

4. The system according to claim 1 or 3, characterized in that said relay circuit (37) further includes break contacts, (MS1, MS2) as momentary switches interlocked to said operation switch (10) and connected in series with said respective normal and reverse relays (Ry$_1$, Ry$_2$) (Fig. 6).

5. The system according to claim 1 or 4, characterized in that said relay circuit (37) including the normal relay (Ry$_1$) and the reverse relay (Ry$_2$) further includes break contacts (MS1, MS2) as momentary switches connected in series with said respective relays and self-holding circuits for said respective normal and reverse relays (Ry$_1$, Ry$_2$), said break contact (MS2) in series with said reverse relay (Ry$_2$) being turned off when said normal relay (Ry$_1$) is rendered operative by said momentary operation switch (10), and said break contact (MS1) as a momentary switch in series with said normal relay (Ry$_1$) being turned off when said reverse relay (Ry$_2$) is rendered operative.

6. The system according to claim 1 or 4, characterized in that said relay circuit further includes a movable contact (28) provided at the side of negative power supply line terminals (N1, B1) of said normal and reverse relays (Ry$_1$, Ry$_2$) and interlocked to said operation switch (10), and in that said movable contact (28) contacts the negative power supply line terminals (N1, B1) of said two relays at a neutral state, to contact a terminal at that side by the movable contact interlocked to said operation switch (10) where said operation switch is operated (Fig. 7).

7. The system according to claim 1, characterized in that said relay circuit further includes a transistor (Tr) to be rendered operative for a predetermined period of time by a charge (in C$_1$) acquired when said operation momentary switch (10) is operated, said transistor (Tr) being connected in series with said normal and reverse relays (Ry$_1$, Ry$_2$) (Fig. 8).

8. The system according to any of claims 1 to 7, characterized in that said motor circuit includes overcurrent limitation posisters (P$_R$, P$_L$) in series with the motors (M$_R$, M$_L$).

9. The system according to any of claims 1 to 8, characterized in that
the limit switches (51 - 54) to cut off said relay circuit (30, 37) and the motor circuit (40) are separately connected in series to the respective motors and are connected in parallel to respective

7

EP 0 289 052 B1

further diodes (D1 - D4) capable of actuating reversely;

the respective cathode sides of the first mentioned diodes (D5, D6) for self-holding in a folded state are connected with each other to be a logic OR, thereby activating the relay (Ry1) for folding; and also the respective cathode sides of the first mentioned diodes (D7, D8) for self-holding in the erected state are connected with each other to be a logic OR, thereby activating the relay (Ry2) for erecting; and

the diodes (D5, D6) for self-holding in a folded state and the diodes (D7, D8) for self-holding in the erected state are provided in branch circuits between the limit switches (51 - 54) to connect the respective cathode sides of the diodes with corresponding sides of the positive power supply line B(+) of the relays (Ry1, Ry2).

## Revendications

1. Système de commande électrique pour la manoeuvre de rabattement ou de redressement de rétroviseurs extérieurs rabattables d'un véhicule automobile, le système étant monté entre des conducteurs de potentiels différents (100, 101) d'une alimentation en courant et comprenant:

plusieurs corps de rétroviseur extérieur (12) montés de façon rabattable sur les côtés extérieurs d'un véhicule automobile:

un circuit à relais (30, 37) contenant un relais de sens normal ($Ry_1$) et un relais de sens inverse ($Ry_2$), ces relais étant susceptibles d'être rendus actifs en réponse à l'actionnement d'un commutateur sans maintien (10) prévu dans l'habitacle du véhicule automobile pour la commutation des sens normal et inverse de rotation de moteurs, et étant auto-maintenus, une fois rendus actifs, par des circuits d'auto-maintien respectifs (par exemple 60a, 60b) qui établissent, pour le relais respectif, une boucle d'auto-maintien entre les conducteurs de potentiels différents (100, 101), cette boucle comprenant l'enroulement de relais et un contact de relais;

des moteurs électriques réversibles (20, $M_R$, $M_L$), chacun desquels est monté dans l'un desdits corps de rétroviseur (12) et est connecté en série, par une boucle de moteur, à des contacts de travail (61-64, 33, 34) des relais;

et deux interrupteurs de fin de course (51-54) pour chaque corps de rétroviseur (12), lesquels interrupteurs de fin de course sont montés chacun en série dans le circuit d'auto-maintien respectif et sont mis à l'état ouvert lorsque le corps de rétroviseur (12) atteint respectivement sa position redressée ou une position rabattue,

caractérisé en ce que les interrupteurs de fin de course (51-54) sont situés dans des branches qui, entre les conducteurs de potentiels différents (100, 101), sont en commun pour l'une et l'autre de la boucle d'auto-maintien de relais et de la boucle de moteur correspondant à chaque relais ($Ry_1$, $Ry_2$) et à chaque moteur ($M_R$, $M_L$), ces branches, dans la mesure où elles font partie des boucles d'auto-maintien des relais, étant raccordées aux relais respectifs par l'intermédiaire de diodes (D5-D8).

2. Système selon la revendication 1, caractérisé en ce que ledit circuit de relais (30) contient en outre des moyens pour empêcher l'actionnement simultané de l'autre relais respectif, un contact de repos (31) pour le relais de sens inverse ($Ry_2$) étant monté en série avec le relais de sens normal ($Ry_1$) et un contact de repos (32) pour le relais de sens normal ($Ry_1$) étant monté en série avec le relais de sens inverse ($Ry_2$).

3. Système selon la revendication 1, caractérisé en ce que ledit circuit d'auto-maintien comprend un premier circuit d'auto-maintien pour ledit relais de sens normal ($Ry_1$) et un second circuit d'auto-maintien pour ledit relais de sens inverse ($Ry_2$), ces premier et second circuits d'auto-maintien contenant chacun un contact de transfert (33, 34) qui est commuté d'un état ferme à un état ouvert lorsque le relais du circuit d'auto-maintien associé est rendu actif (fig. 4 à 8).

4. Système selon la revendication 1 ou 3, caractérisé en ce que ledit circuit de relais (37) contient en outre des contacts de repos (MS1, MS2) sous forme d'interrupteurs sans maintien interverrouillés avec ledit commutateur de commande (10) et montés en série avec lesdits relais de sens normal et de sens inverse ($Ry_1$, $Ry_2$) respectifs (fig. 6).

5. Système selon la revendication 1 ou 4, caractérisé en ce que ledit circuit de relais (37) contenant le relais de sens normal ($Ry_1$) et le relais de sens inverse ($Ry_2$) contient en outre des contacts de repos (MS1, MS2) sous forme d'interrupteurs sans maintien montés en série avec lesdits relais respectifs et lesdits circuits d'auto-maintien pour lesdits relais respectifs de sens normal et de sens inverse ($Ry_1$,

8

EP 0 289 052 B1

Ry$_2$), ledit contact de repos (MS2) en série avec ledit relais de sens inverse (Ry$_2$) étant mis hors service lorsque ledit relais de sens normal (Ry$_1$) est rendu actif par ledit interrupteur de commande sans maintien (10), et ledit contact de repos (MS1) sous forme d'interrupteur sans maintien en série avec ledit relais de sens normal (Ry$_1$) étant mis hors service lorsque ledit relais de sens inverse (Ry$_2$) est rendu actif.

6. Système selon la revendication 1 ou 4, caractérisé en ce que ledit circuit de relais contient en outre un contact mobile (28) disposé du côté des bornes (N1, B1) de ligne d'alimentation négative desdits relais de sens normal et de sens inverse (Ry$_1$, Ry$_2$) et interverrouillé avec ledit commutateur de commande (10), et en ce que ledit contact mobile (28) est en contact avec les bornes (N1, B1) de ligne d'alimentation négative des deux relais, lorsqu'il est dans un état neutre, et est mis en contact avec une borne de ce côté, par le fait qu'il est interverrouillé avec ledit commutateur de commande (10), lorsque ce dernier est actionné (fig. 7).

7. Système selon la revendication 1, caractérisé en ce que ledit circuit de relais contient en outre un transistor (Tr) destiné à être activé pendant une période de temps prédéterminée par une charge (dans C$_1$) accumulée au moment où ledit commutateur de commande sans maintien (10) est actionné, ledit transistor (Tr) étant monté en série avec lesdits relais de sens normal et de sens inverse (Ry$_1$, Ry$_2$) (fig. 8).

8. Système selon l'une quelconque des revendications 1 à 7, caractérisé en ce que ledit circuit de moteur contient des posistors de limitation de courant de surcharge (P$_R$, P$_L$) en série avec les moteurs (M$_R$, M$_L$).

9. Système selon l'une quelconque des revendications 1 à 8, caractérisé en ce que
   les interrupteurs de fin de course (51 - 54) destinés à couper lesdits circuits de relais (30, 37) et le circuit de moteur (40) sont connectés séparément en série aux moteurs respectifs et sont connectés en parallèle à des diodes supplémentaires respectives (D1 - D4) susceptibles d'actionnement en sens inverses;
   les côtés cathodes respectifs des premières diodes mentionnées (D5, D6) pour l'auto-maintien à l'état rabattu sont connectés l'un à l'autre de façon à constituer un circuit OU logique, activant ainsi le relais (Ry$_1$) pour le rabattement; et les côtés cathodes respectifs des premières diodes mentionnées (D7, D8) pour l'auto-maintien dans l'état redressé sont également connectés l'un à l'autre de façon à constituer un circuit OU logique, activant ainsi le relais (Ry$_2$) pour le redressement; et
   les diodes (D5, D6) pour l'auto-maintien dans l'état rabattu et les diodes (D7, D8) pour l'auto-maintien dans l'état redressé sont disposées dans des branches de circuit entre les interrupteurs de fin de course (51 - 54), de sorte que les côtés cathodes respectifs des diodes soient connectés aux côtés correspondants de la ligne d'alimentation positive B(+) des relais (Ry$_1$, Ry$_2$).

**Patentansprüche**

1. Elektrisches Antriebssystem für die Einklapp- oder Ausstell-Aktion eines einklappbaren Außenrückblickspiegels eines Motorfahrzeugs, wobei das Antriebssystem zwischen Zuleitungen (100, 101) unterschiedlichen Potentials einer Stromquelle angeordnet ist und folgende Teile umfaßt:
   eine Mehrzahl von Außenrückblickspiegel-Körpern (12), die einklappbar an den Außenseiten eines Motorfahrzeugs montiert sind;
   eine Relaisschaltung (30, 37) mit einem Normal-Relais (Ry$_1$) und einem Umkehr-Relais (Ry$_2$), wobei diese Relais in Antwort auf den Betrieb eines im Innenraum des Motorfahrzeugs befindlichen Kurzzeitkontaktgabe-Schalters (10) zum Schalten der Normalrichtung und der Umkehrrichtung einer Motorrotation in Betrieb setzbar sind und durch jeweilige Selbsthaltekreise (z.B. 60a, 60b), die für die jeweiligen Relais zwischen den Zuleitungen (100, 101) unterschiedlichen Potentials eine Selbsthalteschleife bilden, auf eine Inbetriebsetzung hin selbsthaltend bleiben, wobei die Selbsthalteschleife die Relaiswicklung und einen Relaiskontakt umfaßt;
   umkehrbare elektrische Motoren (20, M$_R$, M$_L$), die jeweils in einem der Spiegelkörper (12) montiert sind und durch eine Motorschleife in Reihe mit Arbeitskontakten (61-64, 33, 34) der Relais geschaltet sind;
   und zwei Endschalter (51-54) für jeden Spiegelkörper (12), die in Reihe in die jeweilige Selbsthalteschleife eingesetzt sind und durch den Spiegelkörper (12) geöffnet werden, wenn er seine ausgestellte bzw. eine eingeklappte Stellung erreicht,

9

EP 0 289 052 B1

dadurch gekennzeichnet, daß die Endschalter (51-54) in Schaltungszweigen angeordnet sind, die zwischen den Zuleitungen (100, 101) unterschiedlichen Potentials sowohl zur Relais-Selbsthalteschleife als auch zur Motorschleife für jedes Relais (RY$_1$, RY$_2$) und jeden Motor (MR, ML) gehören und die, soweit sie Teil der Selbsthalteschleifen der Relais sind, mit den betreffenden Relais über Dioden (D5-D8) verbunden sind.

2. System nach Anspruch 1, dadurch gekennzeichnet, daß die Relaisschaltung (30) weiterhin eine Einrichtung zum Verhindern des gleichzeitigen Betriebs des jeweiligen anderen Relais aufweist, derart, daß ein Unterbrechungskontakt (31) für das Umkehr-Relais (Ry$_2$) in Reihe mit dem Normal-Relais (Ry$_1$) geschaltet ist und ein Unterbrechungskontakt (32) für das Normal-Relais (Ry$_1$) in Reihe mit dem Umkehr-Relais (Ry$_2$) geschaltet ist.

3. System nach Anspruch 1, dadurch gekennzeichnet, daß die Selbsthalteschaltung eine erste Selbsthalteschaltung für das Normal-Relais (Ry$_1$) und eine zweite Selbsthalteschaltung für das Umkehr-Relais (Ry$_2$) umfaßt, von denen jede einen Umschaltkontakt (33, 34) umfaßt, der von einer geschlossenen in eine geöffnete Stellung zu schalten ist, wenn das Relais der zugeordneten Selbsthalteschaltung in Betrieb gesetzt ist (Fig. 4-8).

4. System nach Anspruch 1 oder 3, dadurch gekennzeichnet, daß die Relaisschaltung (37) weiterhin Unterbrechungskontakte (MS1, MS2) aufweist, die als Momentanschalter mit dem Kontaktgabe-Schalter (10) gekoppelt sind und in Reihe mit dem Normal-Relais (Ry$_1$) bzw. mit dem Umkehr-Relais (Ry$_2$) geschaltet sind (Fig. 6).

5. System nach Anspruch 1 oder 4, dadurch gekennzeichnet, daß die das Normal-Relais (Ry$_1$) und das Umkehr-Relais (Ry$_2$) enthaltende Relaisschaltung (37) weiterhin Unterbrechungskontakte (MS1, MS2) enthält, die als Momentanschalter in Reihe mit den betreffenden Relais und den Selbsthalteschaltungen für das Normal-Relais (Ry$_1$) bzw. das Umkehr-Relais (Ry$_2$) geschaltet sind, wobei der in Reihe mit dem Umkehr-Relais (Ry$_2$) geschaltete Unterbrechungskontakt (MS2) geöffnet wird, wenn das Normal-Relais (Ry$_1$) durch den Kurzzeitkontaktgabe-Schalter (10) in Betrieb gesetzt wird, und der Unterbrechungskontakt (MS1) als Momentanschalter in Reihe mit dem Normal-Relais (Ry$_1$) geöffnet wird, wenn das Umkehr-Relais (Ry$_2$) in Betrieb gesetzt wird.

6. System nach Anspruch 1 oder 4, dadurch gekennzeichnet, daß die Relaisschaltung weiterhin einen beweglichen Kontakt (28) enthält, der sich auf der Seite der negativen Leitungsklemmen (N1, B1) der Stromversorgung des Normal-Relais (Ry$_1$) und des Umkehr-Relais (Ry$_2$) befindet und mit dem Kontaktgabe-Schalter (10) gekoppelt ist, und daß der bewegliche Kontakt (28) die negativen Leitungsklemmen (N1, B1) der Stromversorgung der beiden Relais in einer neutralen Stellung kontaktiert, um eine Klemme auf derjenigen Seite durch den mit dem Kontaktgabe-Schalter (10) gekoppelten beweglichen Kontakt zu kontaktieren, auf die der Betriebsschalter gestellt ist (Fig. 7).

7. System nach Anspruch 1, dadurch gekennzeichnet, daß die Relaisschaltung weiterhin einen Transistor (Tr) umfaßt, der durch eine Ladung (in C$_1$), die bei der Betätigung des Kurzzeitkontaktgabe-Schalters (10) auftritt, für eine gegebene Zeitspanne in Betrieb setzbar ist und der in Reihe mit dem Normal-Relais (Ry$_1$) und dem Umkehr-Relais (Ry$_2$) geschaltet ist (Fig. 8).

8. System nach einem der Ansprüche 1 bis 7, dadurch gekennzeichnet, daß die Motorschaltung Überstrombegrenzer-Posister (P$_R$,P$_L$) in Reihe mit den Motoren (M$_R$, M$_L$) umfaßt.

9. System nach einem der Ansprüche 1 bis 8, dadurch gekennzeichnet, daß
die Endschalter (51-54) zum Unterbrechen der Relaisschaltung (30, 37) und der Motorschaltung (40) separat in Reihe mit den jeweiligen Motoren geschaltet sind und parallel zu jeweiligen weiteren Dioden (D1-D4), die in Gegenrichtung betreibbar sind, geschaltet sind;
daß die jeweiligen Kathodenseiten der ersteren Dioden (D5, D6) zum Selbsthalten in einem eingeklappten Zustand miteinander zur Bildung eines logischen ODER geschaltet sind, wodurch sie das Relais (Ry$_1$) zum Einklappen aktivieren; und daß auch die jeweiligen Kathodenseiten der ersteren Dioden (D7, D8) zum Selbsthalten im ausgestellten Zustand miteinander zur Bildung eines logischen ODER verbunden sind, wodurch sie das Relais (Ry$_2$) zum Ausstellen aktivieren; und
daß die Dioden (D5, D6) zum Selbsthalten in einem eingeklappten Zustand und die Dioden (D7, D8) zum Selbsthalten im ausgestellten Zustand in den Zweigschaltungen zwischen den Endschaltern (51-54) zum Verbinden der jeweiligen Kathodenseiten der Dioden mit entsprechenden Seiten der positiven Stromversorgungs-Zuleitung B( + ) der Relais ($Ry_1$, $Ry_2$) angeordnet sind.

# FIG.1

# FIG.2

```
                                                    11
┌──────────────────┐        ┌──────────────┐
│    OPERATING     │───────▶│    RELAY     │
│    MOMENTARY     │        │   CIRCUIT    │──── 30
│     SWITCH       │        └──────────────┘
└──────────────────┘              ▲
    10                            │
         ┌────────────────────────┘
  60a ┌──────────────────────────┐
 (60b)│  SELF  HOLDING  CIRCUIT  │
      └──────────────────────────┘
              ▲                  │
              │                  ▼
  ┌──────────────────┐    ┌──────────────┐
  │  LIMIT SWITCHES  │───▶│    MOTOR     │
 50                   │    │   CIRCUIT    │── 40
  └──────────────────┘    └──────────────┘
```

# FIG.3

# FIG.4

## FIG.5

## FIG.6

# FIG.7

# FIG.8